# EUROPÄISCHE PATENTANMELDUNG

(11) **EP 1 149 657 A2**
(43) Veröffentlichungstag der Anmeldung: **31.10.2001**
(21) Anmeldenummer: 01109738.3
(22) Anmeldetag: 20.04.2001
(51) Int. Cl.: B23K 26/00, B23K 26/10, B23Q 11/12, B25B 11/00

(54) **Aufspannvorrichtung**

(30) Priorität: 27.04.2000 DE 10020672
(71) Anmelder: NSM Magnettechnik GmbH & Co. KG, 59399 Olfen (DE)
(72) Erfinder: Kulik, Gerhard, 59439 Holzwickede (DE)
(74) Vertreter: Hennicke, Ernst Rüdiger,Dipl.-Ing.

(57) **Zusammenfassung**

Die erfindungsgemäße Aufspannvorrichtung (10) für Werkstücke (11,12), wie sie bei Schweißeinrichtungen verwendet wird, weist eine als Kühlplatte (28) ausgebildete Grundplatte (14) sowie eine oder mehrere daran angeordnete Magnethalteeinrichtungen (15) auf, woran mindestens eine Wärmeleitplatte (26) angeordnet ist, die sich zwischen der Kühlplatte und der von der Magnethalteeinrichtung gebildeten Haltefläche (21) erstreckt und die mit der Haltefläche und der Kühlplatte in wärmeleitender Kontaktverbindung (27) steht. Die beim Verschweißen der mit der Aufspannvorrichtung gehaltenen Werkstücke entstehende Wärme wird im Bereich der Haltefläche von der Wärmeleitplatte aufgenommen und schnell in die als Kühlplatte ausgebildete Grundplatte abgeführt, wobei der bauliche Aufwand für die Kühlvorrichtung gering bleibt.

## Beschreibung

Die Erfindung betrifft eine Aufspannvorrichtung für Werkstücke insbesondere zur Verwendung bei Schweißeinrichtungen, mit mindestens einer an einer Grundplatte angeordneten, eine Haltefläche bildenden Magnethalteeinrichtung und mit einer im Bereich der Haltefläche wirksamen Kühlvorrichtung.

Derartige Aufspannvorrichtungen, wie sie beispielsweise aus dem deutschen Gebrauchsmuster G 94 19 960 bekannt sind, dienen für die Werkstückhalterung in einer einzuhaltenden Bearbeitungsposition beispielsweise in Schweißstraßen, in denen zwei zu verschweißende Bleche od.dgl. von der Aufspannvorrichtung in der korrekten Lage zueinander arretiert werden. Um die beim Verschweißen auftretende große Wärme möglichst schnell aus dem Bereich der Haltefläche abzuführen und so zu hohe Temperaturen zu vermeiden, die andernfalls zu einem Verwerfen der verschweißten, an der Haltefläche von der Magnethalteeinrichtung gehaltenen Werkstücke führen könnten, ist die Kühlvorrichtung vorgesehen, die sicherstellt, daß die Temperatur an der Haltefläche nicht unzulässig ansteigt.

Bei der Aufspannvorrichtung nach dem deutschen Gebrauchsmuster G 94 19 960 besteht die Kühlvorrichtung im wesentlichen aus einem zwischen zwei Magnethalteeinrichtungen angeordneten, unterhalb der Schweißzone aufrechtstehenden Kühlelement, das von einem Kühlmittel, beispielsweise Wasser, durchströmt wird und die oberhalb seiner oberen Stirnfläche erzeugte Schweißwärme sowie die ihm über die seitlich anliegenden Magnethalteeinrichtungen zugeführte Wärme über die zirkulierende Kühlflüssigkeit abführt. Die bekannte Einrichtung hat sich als ausgesprochen zuverlässig und wirksam erwiesen, ist jedoch in ihrem Aufbau vergleichsweise aufwendig und insbesondere dann im Einsatz teuer, wenn beispielsweise bei langen, zu bearbeitenden Werkstücken mehrere Magnethalteeinrichtungen und Kühlelemente hintereinander angeordnet werden müssen, um die Bauteile zu halten und die entstehende Wärme abzuführen.

Aufgabe der Erfindung ist es daher, eine Vorrichtung der eingangs genannten Art zu schaffen, mit der Wärme aus dem Bearbeitungsbereich der Werkstücke in besonders effizienter, technisch einfacher und preiswerter Weise abgeführt werden kann. Diese Aufgabe wird mit der Erfindung dadurch gelöst, daß die Kühlvorrichtung im wesentlichen aus der als Kühlplatte ausgebildeten Grundplatte sowie aus mindestens einer Wärmeleitplatte besteht, die an der Magnethalteeinrichtung zwischen der Kühlplatte und der Haltefläche mit diesen in wärmeleitender Kontaktverbindung stehend angeordnet ist. Die Wärmeleitplatte besteht dabei vorzugsweise aus Kupfer oder einem anderen Material mit hoher Wärmeleitfähigkeit.

Anders als bei der bekannten Aufspannvorrichtung befindet sich bei der Erfindung das eigentliche Kühlelement also nicht in unmittelbarer Nähe an der Haltefläche im Bearbeitungsbereich, sondern wird von der die Magnethalteeinrichtung(en) tragenden Grundplatte gebildet bzw. ist in oder an dieser angeordnet. Zur Übertragung der im Bereich der Haltefläche entstehenden Wärme und Übergabe an die Kühlplatte bzw. das jeweilige, in oder an dieser angeordneten Kühlelement dient bzw. dienen die Wärmeleitplatte(n), die die Schweißwärme od.dgl. an der Bearbeitungsstelle aufnehmen und entlang der Magnethalteeinrichtung über die wärmeleitende Kontaktverbindung in die als Kühlplatte ausgebildete Grundplatte bzw. die darin angeordneten Kühlelemente leiten. Hierzu kann die Kühlplatte in einer bevorzugten Ausführungsform im Bereich der an sie angrenzenden Wärmeleitplatte(n) mit wenigstens einem Kühlelement versehen sein, das beispielsweise von mindestens einem, von Kühlflüssigkeit durchströmten Flüssigkeitskanal gebildet sein kann. Es ist insbesondere für große, abzuführende Wärmemengen in vorteilhafter Weise auch möglich, mehrere im Inneren der Kühlplatte angeordnete Flüssigkeitskanäle vorzusehen, die von Kühlflüssigkeit durchströmt werden, um die an die Kühlplatte von der Wärmeleitplatte abgegebene Wärme abzuführen. Als Kühlplatte kann aber natürlich auch eine gekühlte magnetische Spannplatte dienen, wie sie beispielsweise bei Schleif- oder Fräsmaschinen zum Einsatz kommt, um die zu bearbeitenden Werkstücke zu arretieren.

Vorzugsweise ist die Wärmeleitplatte im Inneren der von einem Schutzmantel umgebenen Magnethalteeinrichtung angeordnet. Der Schutzmantel, der zweckmäßig aus einem Stahlblech besteht, das gegebenenfalls an seiner Außenseite noch eine schmutzabweisende, glatte Oberfläche erhält, verhindert, daß Schweißspritzer oder - dämpfe sich auf der Wärmeleitplatte ablagern und dadurch deren Wärmeaufnahmefähigkeit negativ beeinflussen. Die Wärmeleitplatte ist vorzugsweise flächig an dem Schutzmantel anliegend angeordnet bzw. mit diesem verbunden, wodurch ein guter Wärmeleitkontakt zwischen den beiden Teilen erzielt wird.

Die Wärmeleitplatte kann erfindungsgemäß in Baueinheit mit der Magnethalteeinrichtung ausgestaltet sind und die Magnethalteeinrichtung ist vorzugsweise auf der Kühlplatte in verschiedenen Stellungen arretierbar. Es ist somit möglich, die Aufspannvorrichtung in kurzer Zeit für verschiedene zu bearbeitende Bauteile umzubauen, indem einfach die Magnethalteeinrichtung(en) in die jeweils neue, gewünschte Position auf der Grundplatte ausgerichtet und auf dieser arretiert wird/werden, wobei dann gleichzeitig die Wärmeleitplatte in wärmeleitende Kontaktverbindung mit der als Kühlplatte ausgebildeten Grundplatte kommt und die an der neuen Bearbeitungsstelle auftretende Wärme in der zuvor beschriebenen Weise an die Kühlplatte abführen kann.

In an sich bekannter Weise kann die Magnethalteeinrichtung ein vorzugsweise elektrisch schaltbares Dauermagnetsystem aufweisen, bei dem die von einem Dauermagneten erzeugte Haltekraft durch Überlagerung mit einem von einem Elektromagneten erzeugten Magnetfeld kompensiert werden kann, um die Haltefunktion auszuschalten und eine Entnahme des Werkstücks bzw. die Ausrichtung eines neuen Werkstückes zu ermöglichen. Alternativ ist es natürlich auch möglich, die Werkstücke allein mit Elektromagneten zu halten.

Vorzugsweise sind an der Grundplatte mindestens zwei Magnethalteeinrichtungen unter Bildung eines Spaltes angeordnet, wobei der Spalt ausgehend von den Halteflächen der Magnethalteeinrichtungen zur Kühlplatte hin divergiert. Durch den Spalt können die beim Verschweißen zweier Werkstücke entstehenden Schweißgase oder -dämpfe leicht abgeführt werden, wobei die divergierende, also von der Haltefläche weg v-förmig auseinandergehende Anordnung dafür sorgt, daß der Schweißrauch an den Außenwänden der Magnethalteeinrichtungen nicht anbackt. Die Gefahr von Verschmutzungen wird noch weiter verringert, wenn die Magnethalteeinrichtung und/oder die Kühlplatte an ihrer Außen- bzw. Oberseite mit einer schmutzabweisenden Beschichtung od.dgl. versehen ist/sind. Die Kühlplatte kann im Bereich des Spaltes unterbrochen sein, wobei die beiden Plattenteile unterhalb des Spaltes einen Reinigungsschlitz freilassen, durch den hindurch der Spalt mit Hilfe einer Bürste oder eines anderen geeigneten Reinigungswerkzeuges gesäubert werden kann, wenn es trotz der vorbeschriebenen Maßnahmen zu Verunreinigungen kommen sollte. Im Betrieb der Vorrichtung ist der Reinigungsschlitz zweckmäßig von einer Verschlußleiste verschlossen.

Besonders zweckmäßig kann es sein, in dem Spalt auch bei einer einteiligen Kühlplatte eine Reinigungsleiste vorzusehen, mit deren Hilfe der Spalt von dessen stirnseitigen Enden her im Bedarfsfalle gesäubert werden kann. Bei einer zweiteiligen Kühlplatte kann die Reinigungsleiste gleichzeitig die Verschlußleiste bilden, die bei Nichtgebrauch den Reinigungsschlitz verschließt.

Weitere Merkmale und Vorteile der Erfindung ergeben sich aus der nachfolgenden Beschreibung und der Zeichnung, worin bevorzugte Ausführungsformen der Erfindung an Beispielen näher erläutert sind. Es zeigt:
- Fig.1: eine erste Ausführungsform der erfindungsgemäßen Aufspannvorrichtung im Querschnitt.
- Fig.2: eine zweite Ausführungsform der erfindungsgemäßen Aufspannvorrichtung in einer Fig.1 entsprechenden Darstellung.

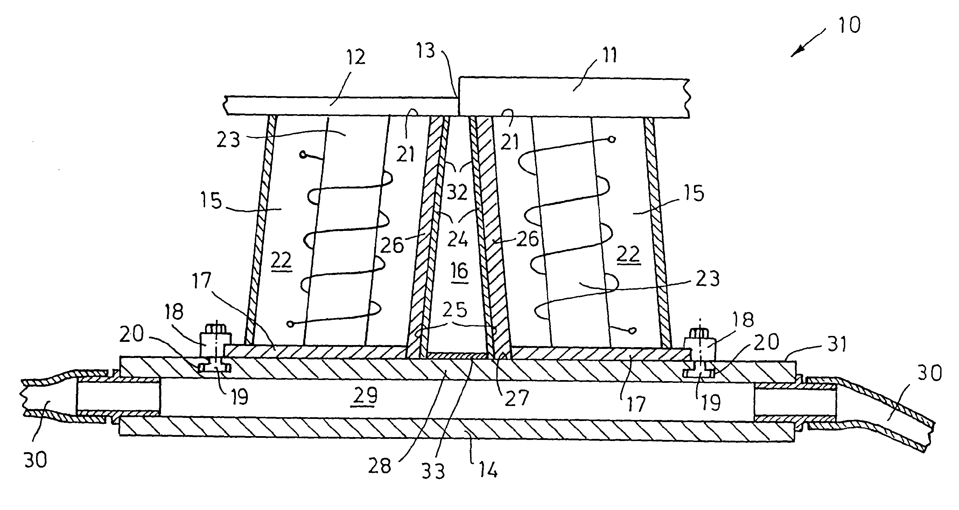

Die in der Zeichnung dargestellte Aufspannvorrichtung 10 dient für die Arretierung zweier Bleche 11,12, die von einer nicht dargestellten Laserstrahl-Schweißanlage entlang ihrer Stoßstelle 13 miteinander verschweißt werden sollen. Die in Fig.1 dargestellte, erste Ausführungsform der Aufspannvorrichtung 10 besteht im wesentlichen aus einer unteren Grundplatte 14 und zwei Reihen mit jeweils mehreren Magnethalteeinrichtungen 15, die parallel zu der Stoßfuge 13 ausgerichtet sind und zwischen sich unterhalb der Stoßfuge 13 einen Spalt 16 bilden. Die Magnethalteeinrichtungen sind mit ihren Bodenplatten 17 auf die Grundplatte 14 aufgesetzt und an dieser mittels Klemmstücken 18 arretiert, die an Hammerkopfmuttern 19 angeschlossen sind, welche wiederum in in der Grundplatte 14 vorgesehenen Arretiernuten 20 aufgenommen sind.

An ihrer Oberseite bilden die Magnethalteeinrichtungen 15 Halteflächen 21 für die Bleche 11,12, die von im Inneren 22 der Magnethalteeinrichtungen angeordneten, elektrisch schaltbaren Dauermagnetsystemen 23 fest gegen die oberen Halteflächen 21 gezogen werden.

Wie sich aus Fig.1 ergibt, wird der zwischen den Magnethalteeinrichtungen ausgebildete Spalte von den einander gegenüberliegenden Seitenwänden der die Magneteinrichtungen schützend umgebenden Schutzmäntel begrenzt, die aus dünnen Blechen 24 bestehen, an deren Innenseiten 25 Wärmeleitplatten 26 flächig anliegen. Die Wärmeleitplatten sind Bleche aus Kupfer oder einem anderen, gut wärmeleitenden Material, die eine größere Dicke als die äußeren Schutzmantelbleche 24 haben. Sie erstrecken sich von der oberen Haltefläche 21 der jeweiligen Magnethalteeinrichtung bis zu deren Bodenplatte 17 und stehen mit der Grundplatte 14 in wärmeleitender Kontaktverbindung, wie dies bei 27 zu erkennen ist. Die Grundplatte 14 selbst wiederum ist als Kühlplatte 28 ausgebildet und hierzu in ihrem Inneren mit Flüssigkeitskanälen 29 versehen, die von einer Kühlflüssigkeit durchströmt werden, die über an die Flüssigkeitskanäle 29 angeschlossene Schläuche 30 zu- bzw. abgeführt wird. Die beim Verschweißen der Bleche 11,12 entlang ihrer Stoßstelle 13 erzeugte Wärme wird von den Wärmeleitplatten 26 aufgenommen und schnell an die Kühl-Grundplatte 14 transportiert, in der die zirkulierende Kühlflüssigkeit die Wärme übernimmt und abführt. Durch den zwischen den einander gegenüberliegenden Magnethalteeinrichtungen ausgebildeten Spalt werden die beim Schweißen entstehenden Schweißgase problemlos abgeführt, wobei durch die schräge Anordnung der Magnethalteeinrichtungen und die sich daraus ergebende, divergierende Form des Spaltes 16 ein Anhaften der entstehenden Dämpfe an den Außenseiten der Schutzmantelbleche 24 weitestgehend vermieden wird. Um ein Anhaften von Verunreinigungen noch besser zu unterbinden, ist die Kühlplatte an ihrer Oberseite 31 und sind die Magnethalteeinrichtungen an ihren Außenseiten 32 mit schmutzabweisenden Beschichtungen versehen, von denen aus Gründen der übersichtlicheren Darstellung nur die Beschichtung 33 auf der Kühlplatte dargestellt ist.

Man erkennt, daß die Magnethalteeinrichtungen 15 in Baueinheit mit den darin angeordneten Wärmeleitplatten 26 auf der Grundplatte leicht versetzt werden können, indem die Klemmstücke 18 gelöst und die Magnethalteeinrichtungen dann an anderer Stelle wieder festgeklemmt werden. Hierzu weist die Kühlplatte 28 zweckmäßig eine Vielzahl von einander kreuzenden Arretiernuten 20 auf, so daß eine Befestigung der Magneteinrichtungen an praktisch beliebiger Stelle der Platte möglich wird. Die Magnethalteeinrichtungen können in ihrem Querschnitt rund oder eckig aufgebaut sein, wobei dann die Form der Wärmeleitplatte an die entsprechende Querschnittsform der Magnetspanneinrichtungen angepasst ist, also gegebenenfalls auch bogenförmig ausgestaltet sein kann. In allen Fällen wird die Anordnung so getroffen, daß die Wärmeleitplatten der Magnethalteeinrichtungen in großer räumlicher Nähe zu dem Schweißbereich sich befinden und an der Haltefläche 21 in wärmeleitender Kontaktverbindung zu den Blechen 11,12 stehen, um die beim Schweißen entstehende Wärme mit möglichst geringem Wärmeübergangswiderstand aufzunehmen und zu der unten liegenden Kühlplatte 28 transportieren zu können.

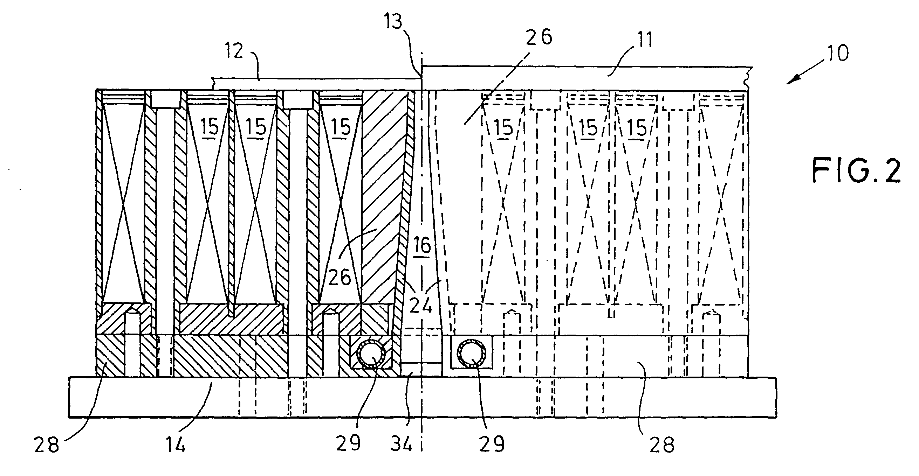

Die in Fig.2 dargestellte, zweite Ausführungsform der erfindungsgemäßen Aufspannvorrichtung ähnelt in ihrem Gesamtaufbau weitestgehend der ersten Ausführungsform. Die den jeweiligen Teilen der ersten Ausführungsform entsprechenden Bauelemente sind demgemäß mit denselben Bezugszeichen versehen. Soweit die beiden Ausführungsformen miteinander übereinstimmen, soll hier auf eine erneute Beschreibung der entsprechenden Bauteile verzichtet und anstelle dessen auf die vorstehende Beschreibung verwiesen werden.

Die in Fig. 2 dargestellte, zweite Ausführungsform unterscheidet sich von dem in Fig.1 dargestellten Beispiel im wesentlichen darin, daß die Kühlplatte 28 nur dort mit Kühlelementen versehen ist, wo die abzuführende Wärme von den Wärmeleitplatten 26 tatsächlich anfällt. Hierzu ist die Kühlplatte 28 unterhalb der unteren Enden der Wärmeleitplatten 26 mit je einem in deren Längsrichtung verlaufenden Flüssigkeitskanal 29 versehen, durch den Wasser oder ein anderes, geeignetes Kühlmedium geleitet wird, das die von den Wärmeleitplatten 26 herangeführte Wärme aufnimmt und abführt. Bei dieser Ausführungsform ist die Kühlplatte mehrteilig ausgeführt und mit einem unterhalb des zwischen den Magnethalteeinrichtungen 15 ausgebildeten Spalts 16 angeordneten Reinigungsschlitz 34 versehen, der im Normalbetrieb der Vorrichtung von einer Verschlußleiste 35 verschlossen ist. Die Verschlußleiste kann an ihrer Oberseite mit einer bürstenartigen Reinigungseinrichtung versehen sein. Zum Reinigen des Spaltes 16 kann die Verschlußleiste aus dem Reinigungsschlitz herausgezogen werden, um dann mit der Reinigungseinrichtung die Bleche 24 von etwaigen Ablagerungen zu befreien, die beim Verschweißen der Bleche entstehen.

Man erkennt, daß bei der zweiten Ausführungsform die Magnethalteeinrichtungen nicht mittels Klemmstücken und Hammerkopfschrauben an der Kühlplatte arretiert sind, sondern mit Hilfe von Befestigungsschrauben, die durch die Grundplatte 14 bzw. die Kühlplatte 28 hindurch in die Unterteile der Magnethalteeinrichtungen geschraubt sind.

Die Erfindung ist nicht auf die dargestellten und beschriebenen Ausführungsbeispiele beschränkt, sondern es sind verschiedene Änderungen und Ergänzungen möglich, ohne den Rahmen der Erfindung zu verlassen. So ist es beispielsweise möglich, die Kühlplatte in Form einer von einem Kühlkanal durchsetzten Kupferleiste auszugestalten, die zwischen den Sockeln zweier benachbarter Magnethalteeinrichtungen so angeordnet ist, daß die Wärmeleitplatten dieser beiden Magnethalteeinrichtungen mit ihren unteren Enden auf der Kupferleiste aufstehen. Die von den beiden Wärmeleitplatten herangeführte Wärme wird auch dann von der Flüssigkeit abgeführt, die durch den Kühlkanal strömt, der wie bei der oben beschriebenen zweiten Ausführungsform parallel zu den Wärmeleitplatten verläuft.

## Patentansprüche

1. Aufspannvorrichtung für Werkstücke insbesondere zur Verwendung bei Schweißeinrichtungen, mit mindestens einer an einer Grundplatte angeordneten, eine Haltefläche bildenden Magnethalteeinrichtung und mit einer im Bereich der Haltefläche wirksamen Kühlvorrichtung, **dadurch gekennzeichnet, daß** die Kühlvorrichtung (26,28) im wesentlichen aus der als Kühlplatte (28) ausgebildeten Grundplatte (14) sowie aus mindestens einer Wärmeplatte (26) besteht, die an der Magnethalteeinrichtung (15) zwischen der Kühlplatte (28) und der Haltefläche (21) mit diesen in wärmeleitender Kontaktverbindung (27) stehend angeordnet ist.

2. Aufspannvorrichtung nach Anspruch 1, **dadurch gekennzeichnet, daß** die Wärmeleitplatte (26) aus Kupfer oder einem anderen Material mit hoher Wärmeleitfähigkeit besteht.

3. Aufspannvorrichtung nach Anspruch 1 oder 2, **dadurch gekennzeichnet, daß** die Kühlplatte (28) im Bereich der an sie angrenzenden Wärmeleitplatte(n) (26) mit wenigstens einem Kühlelement (29) versehen ist.

4. Aufspannvorrichtung nach Anspruch 3, **dadurch gekennzeichnet, daß** das Kühlelement (29) von mindestens einem von Flüssigkeit durchströmten Flüssigkeitskanal gebildet wird.

5. Aufspannvorrichtung nach einem der Ansprüche 1 bis 4, **dadurch gekennzeichnet, daß** mehrere im Inneren der Kühlplatte (28) angeordnete Flüssigkeitskanäle (29) vorgesehen sind, die von einer Kühlflüssigkeit durchströmt werden.

6. Aufspannvorrichtung nach einem der Ansprüche 1 bis 5, **dadurch gekennzeichnet, daß** die Wärmeleitplatte (26) im Inneren der von einem Schutzmantel (24) umgebenen Magnethalteeinrichtung (15) angeordnet ist.

7. Aufspanneinrichtung nach einem der Ansprüche 1 bis 6, **dadurch gekennzeichnet, daß** die Wärmeleitplatte (26) flächig an dem Schutzmantel (24) anliegt bzw. mit diesem verbunden ist.

8. Aufspanneinrichtung nach einem der Ansprüche 1 bis 7, **dadurch gekennzeichnet, daß** die Wärmeleitplatte (26) in Baueinheit mit der Magnethalteeinrichtung (15) ausgestaltet ist, und daß die Magnethalteeinrichtung (15) auf der Kühlplatte (28) in verschiedenen Stellungen arretierbar ist.

9. Aufspannvorrichtung nach einem der Ansprüche 1 bis 8, **dadurch gekennzeichnet, daß** die Magnethalteeinrichtung (15) ein vorzugsweise elektrisch schaltbares Dauermagnetsystem (23) oder ein elektrisches Magnetsystem aufweist.

10. Aufspannvorrichtung nach einem der Ansprüche 1 bis 9, **dadurch gekennzeichnet, daß** mindestens zwei Magnethalteeinrichtungen (15) unter Bildung eines Spaltes (16) an der Kühlplatte (28) angeordnet sind, wobei der Spalt (16) ausgehend von den Halteflächen (21) der Magnethalteeinrichtungen (15) zur Kühlplatte (28) hin divergiert.

11. Aufspannvorrichtung nach einem der Ansprüche 1 bis 10, **dadurch gekennzeichnet, daß** die Magnethalteeinrichtung (15) und/oder die Kühlplatte (28) an ihrer Außen- bzw. Oberseite (32 bzw. 31) mit einer schmutzabweisenden Beschichtung (33) od.dgl. versehen ist/sind.

12. Aufspannvorrichtung nach einem der Ansprüche 1 bis 11, **dadurch gekennzeichnet, daß** die Kühlplatte (28) im Bereich des Spaltes unterbrochen ist, wobei die beiden Plattenteile unterhalb des Spaltes einen verschließbaren Reinigungsschlitz (34) freilassen.

13. Aufspannvorrichtung nach einem der Ansprüche 1 bis 12, **dadurch gekennzeichnet, daß** die Magnethalteeinrichtung (15) mit Hilfe einer gekühlten, elektromagnetischen oder permanentmagnetischen schaltbaren Spannplatte gehalten wird.
